# EUROPÄISCHE PATENTSCHRIFT

(11) **EP 1 396 424 B1**
(45) Veröffentlichungstag und Bekanntmachung des Hinweises auf die Patenterteilung: **28.07.2010**
(21) Anmeldenummer: 03019790.9
(22) Anmeldetag: 30.08.2003
(51) Int. Cl.: B64D 11/02

(54) **Einrichtung für die Lagerung und Weiterleitung von Flüssigkeit**
Fluids storing and distribution device
Dispositif pour le stockage et la distribution de fluides

(30) Priorität: 07.09.2002 DE 10241522
(43) Veröffentlichungstag der Anmeldung: 10.03.2004
(73) Patentinhaber: Airbus Deutschland GmbH, 21129 Hamburg (DE)
(72) Erfinder: Kirma, Safa, Dipl.-Ing., 22880 Wedel / Holstein (DE)
(74) Vertreter: Hansmann, Dierk

(56) Entgegenhaltungen:
- DE-B- 1 165 357
- US-A- 2 939 727
- US-A- 4 521 925

## Beschreibung

Die Erfindung betrifft eine Einrichtung für die Lagerung und Weiterleitung von Flüssigkeit entsprechend dem Oberbegriff des Anspruchs 1, wie sie aus US 4 521 925 bekannt ist. Mit ihr lässt sich ein Baukastensystem umsetzen, das sich für die Anordnung von Wassertanks verschiedener Formgebungen im Flugzeugbau eignet und sich auf verschiedene Flugzeugtypen übertragen läßt. Es wird eine Einrichtung vorgestellt, die weitestgehend auf die breite Vielfalt von unhandlichen Anschlussbauteilen und -verrohrungen verzichtet. Auch wird sie einen geringen Montageaufwand bei geringem Platzbedarf erfordern.

Bei Flugzeugen vom Typ: "Airbus", beispielsweise dem Airbus A340, werden bislang zur Abwasserentsorgung der Bordküchen und Toiletten entsprechende Abwassertanks mit einem Zubehörteile-Sortiment verwendet, deren Installation am vorgesehenen Ort einen hohen Montage- und Installationsaufwand erfordern. So werden maximal drei Abwassertanks von voluminöser Gestalt im Rumpfinneren (Unterflurbereich) auf engstem Raum platziert, deren Transport zum Aufstellungsort schon besonderen Erschwernissen unterliegt. Die fertige Tankanlage umfasst außerdem eine große Vielfalt von Anschlussteilen und von beheizbaren Anschlussverrohrungen, die mehrere unhandliche Installationsteile und Befestigungshalterungen komplexer Art bis zur Fertigstellung benötigt. Jedem Abwassertank ist eine separate Abflussrohrleitung angeschlossen, die einer Rohrleitungsschnittstelle verbunden sind. Eine Hauptabflussleitung, die der Leitungsschnittstelle verbunden ist, führt das den Abwassertanks abgeführte Abwasser seinem Bestimmungsort zu, das über einen Drainagemast das Flugzeug verlässt. Die tankunterseitig verlegten Anschlussverrohrungen sind kostspielig, vielfältig verzweigt, leckageanfällig (störanfällig) ausgeführt und bei der Montage auf engstem Raum sehr problematisch.

Demzufolge liegt der Erfindung die Aufgabe zugrunde, eine Einrichtung für die Lagerung und Weiterleitung von Flüssigkeit für ein Passagierflugzeug im Bereich der Frischwasser- und Abwassersysteme dermaßen zu verbessern, dass eine Vereinfachung von deren Montage und der Installation der angeschlossenen Leitungen erzielt wird. Gleichermaßen wird eine Reduzierung der Vielfalt von benötigten Anschlussteilen und von Anschlussverrohrungen angestrebt, wobei die unhandliche Handhabung dieser Installationsteile und der Befestigungshalterungen (auch aus Gründen der Wartungsfreundlichkeit) abgestellt wird.

Diese Aufgabe wird durch die im Anspruch 1 angegebenen Maßnahmen gelöst. In den weiteren Ansprüchen sind zweckmäßige Weiterbildungen und Ausgestaltungen dieser Maßnahmen angegeben.

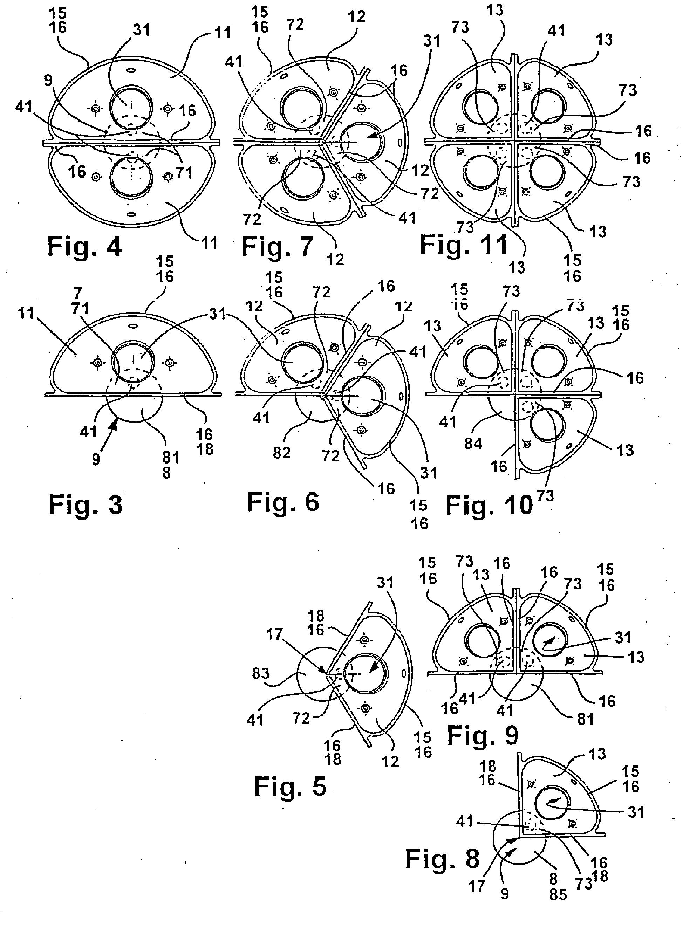

Die Erfindung ist in einem Ausführungsbeispiel anhand der beigefügten Zeichnungen näher erläutert.
Es zeigen
- Fig. 1: eine leitungsverbundene Abwasseranlage traditioneller Bauweise im Unterflurbereich eines Passagierflugzeuges vom Typ: "Airbus" (in Vorderansicht);
und die Figuren 2 bis 18c eine Einrichtung für die Lagerung und Weiterleitung von Flüssigkeit, wonach in der

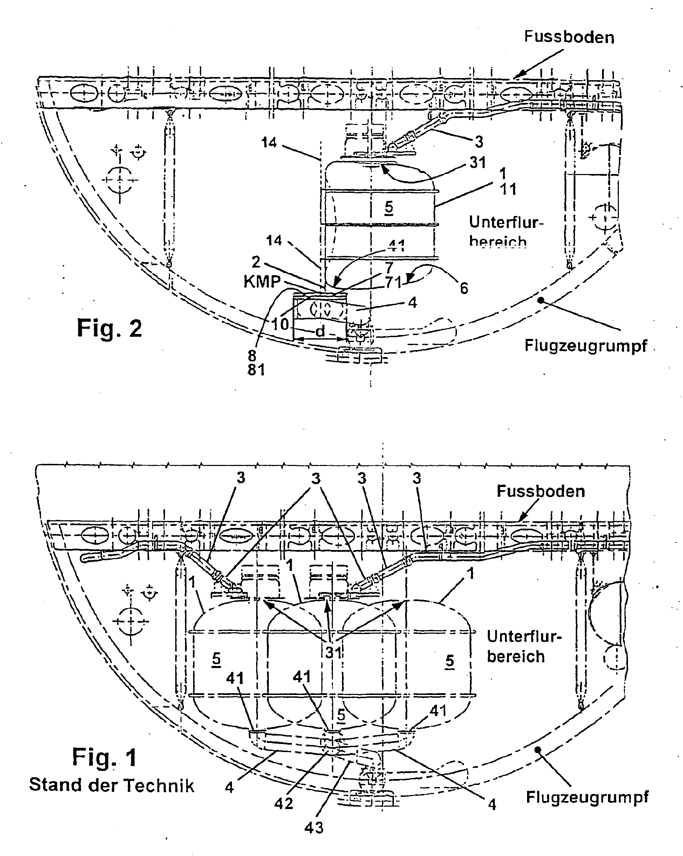

- Fig. 2: ein als Halbtank ausgebildeter leitungsverbundener Abwassertank (in Vorderansicht);
und in der
- Fig. 3: die Draufsicht eines Halbtanks;
- Fig. 4: die Draufsicht von zwei zusammen gestellten Halbtanks;
- Fig. 5: die Draufsicht eines Dritteltanks;
- Fig. 6: die Draufsicht von zwei zusammen gestellten Dritteltanks;
- Fig. 7: die Draufsicht von drei zusammen gestellten Dritteltanks;
- Fig. 8: die Draufsicht von einem Vierteltank;
- Fig. 9: die Draufsicht von zwei zusammen gestellten Vierteltanks;
- Fig. 10: die Draufsicht von drei zusammen gestellten Vierteltanks;
- Fig. 11: die Draufsicht von vier zusammen gestellten Vierteltanks;

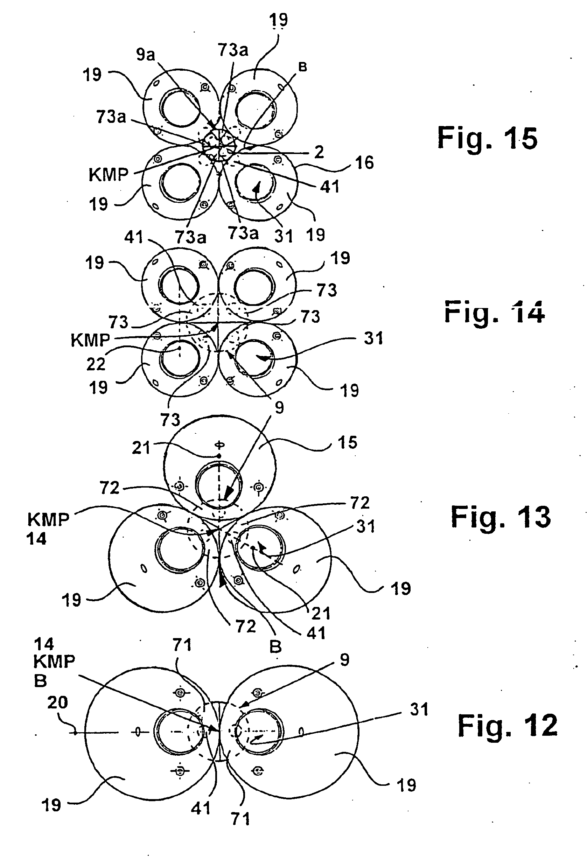

- Fig. 12: die Draufsicht von zwei gegenüber stehenden Zylindertanks;
- Fig. 13: die Draufsicht von drei zusammen gestellten Zylindertanks;
- Fig. 14: die Draufsicht von vier zusammen gestellten Zylindertanks;
- Fig. 15: die Draufsicht nach Fig. 14 mit tankunterseitig modifizierter Anschlussart;

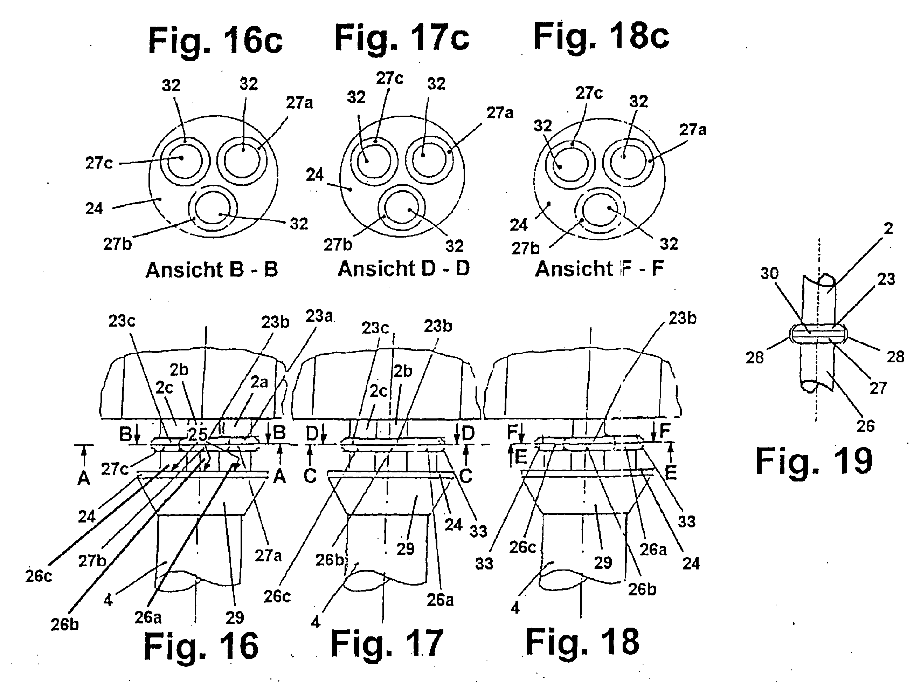

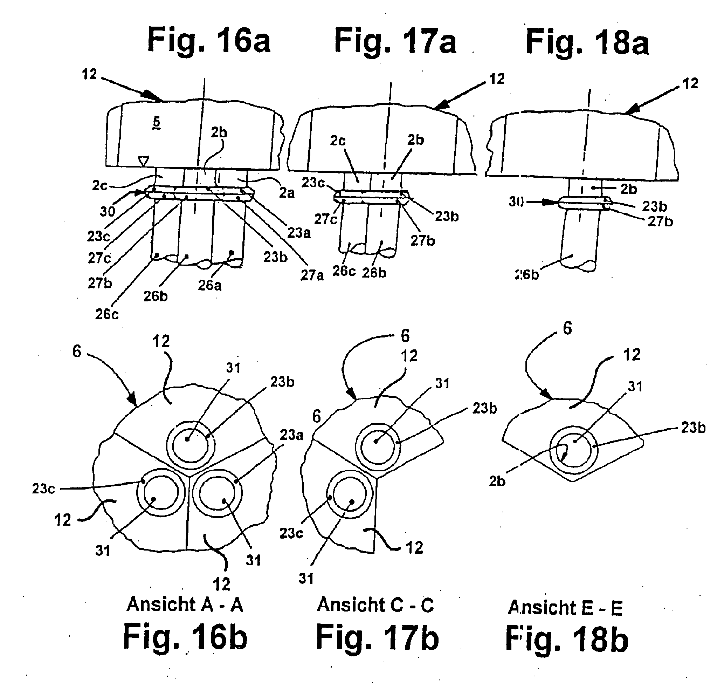

- Fig. 16: die Seitenansicht von drei zusammen gestellten rohrverbundenen Dritteltanks;
- Fig. 16a: die Flanschverbindung der flanschverbundenen Rohrleitungen nach Fig. 16;
- Fig. 16b: die Ansicht A - A der Fig. 16;
- Fig. 16c: die Ansicht B - B der Fig. 16;
- Fig. 17: die Seitenansicht von zwei zusammen gestellten rohrverbundenen Dritteltanks;
- Fig. 17a: die Flanschverbindung der flanschverbundenen Rohrleitungen nach Fig. 17;
- Fig. 17b: die Ansicht C - C der Fig. 17;
- Fig. 17c: die Ansicht D - D der Fig. 17;
- Fig. 18: die Seitenansicht eines rohrverbundenen Dritteltanks;
- Fig. 18a: die Flanschverbindung der flanschverbundenen Rohrleitung nach Fig. 18;
- Fig. 18b: die Ansicht E - E der Fig. 18;
- Fig. 18c: die Ansicht F - F der Fig. 18;
- Fig. 19: die Darstellung einer Flanschverbindung von zwei flanschverbundenen Rohrstutzen
dargestellt wird, wobei die Tanks nach den Fig. 3 bis 15 ohne Anschlußverrohrung gezeigt werden.

Zurückkommend auf die eingangs erwähnte Abwasseranlage, deren traditionelle Bauweise man gegenwärtig im Unterflurbereich eines Passagierflugzeuges vom Typ: "Airbus" noch antreffen wird, werden - wegen einem besseren Verständnis für die nachfolgenden Ausführungen - weitere Angaben (Sachverhalte) ergänzt. Aus der Fig. 1 wird dem Betrachter deutlich, dass die beispielgewählte bekannte Einrichtung mit maximal drei Flüssigkeitsbehältern 1 (pro Flugzeug) ausgestattet ist, die im Unterflurbereich eines Flugzeugrumpfes aufgestellt wird. Es werden zylinderförmige Volltanks mit großem Fassungsvermögen an Flüssigkeit 5 montiert, die aneinander stehend um eine (nicht dargestellte) vertikale Hochachse kreisförmig positioniert sind. Unterhalb des Fußbodens, der den Passagier- und Unterflurbereich im Flugzeuginneren bereichsweise voneinander abgrenzt, sind entsprechende Zuflussleitungen 3 verlegt, die der behälteroberseitig angeordneten Zuflussöffnung 31 des betreffenden Flüssigkeitsbehälters 1 (Voltanks) angeschlossen sind.
Über diese Zuflussleitungen 3 wird die Flüssigkeit 5, beispielsweise das Abwasser im Bereich der Dordküchen und der Toilettenbecken, transportiert, das mit einem Unterdruck (von einer nicht gezeigten Saugquelle) in den einzelnen Flüssigkeitsbehälter 1 gesaugt wird. Wie erwähnt - bereitet der Transport zum Aufstellungsort und die Montage der verwendeten Flüssigkeitsbehälter 1 (Volltanks) auf engstem Raum wegen der einleitend angegebenen Nachteilen erhebliche Schwierigkeiten. Betrachtet man die Installation der bodenmittig den Abflussöffnungen 41 angeschlossenen Abflussleitungen 4, dann wird auffallen, dass an alle Flüssigkeitsbehälter 1 jeweils eine Abflussleitung 4 angeschlossen ist, deren Lage ein bestimmtes Gefälle aufweist. Diese Abflussleitungen 4 sind einer Leitungsverzweigung 42 verbunden, die im Bereich der (von den Behältern umgebenen) Hochachse unterhalb dem Bodenniveau der Flüssigkeitsbehälter 1 angeordnet ist. Ungeachtet der großen Vielfalt an Anschlussteilen und Befestigungsmitteln wird dem hinzugefügt, dass die Zu- und Abflussleitungen eines derartigen Abwassersystems natürlich im Flugbetrieb mittels Heizleitungselementen (Heizleitern), die über die verlegte Leitungslänge dieser Leitungen auf diesen befestigt sind, beheizt werden, um ein Einfrieren des Abwassers oder Vereisen der Leitungen zu vermeiden. Andererseits wird die Leitungsinstallation und / oder auch der Austausch eines defekten Flüssigkeitsbehälters 1 keinesfalls den Aufwand für die routinemäßigen Wartungsund Instandhaltungsarbeiten kostenmindernd beeinflussen. Auch eine Erweiterung mit weiteren Flüssigkeitsbehältern 1 auf Kundenwunsch wird, sofern die Platzverhältnisse es ermöglichen, kaum vorteilhaft realisiert werden.

In den Figuren 2 bis 18c wird nun eine Einrichtung für die Lagerung und Weiterleitung von Flüssigkeit 5 vorgestellt, die sich - beispielsweise bei einer Anwendung im Großraumflugzeug oder in Passagierflugzeugen mit verlängerter Grundversion - über die Leitungslänge einer Abwasserleitung 4 erweitern lässt. Möglich wird diese Maßnahme durch die Benutzung von Flüssigkeitsbehältern 1 unterschiedlichen Aussehens. Sofern man Flüssigkeitsbehälter 1 einsetzt, deren äußere Gestalt jeweils einem Halbtank 11 oder einem Dritteltank 12 oder einem Vierteltank 13 entspricht, werden rationalisierende Maßnahmen machbar, mit denen die vorbeschriebenen Nachteile, welche der bekannten Abwasseranlage traditioneller Bauweise anhaften, sich abstellen lassen, sofern nur Tanks mit gleicher äußere Gestalt pro Einrichtung eingesetzt werden.

Allgemein besteht eine beispielhafte Einrichtung für die Lagerung und Weiterleitung von Flüssigkeit 5 aus wenigstens einem Flüssigkeitsbehälter 1. Letzterer besitzt behälteroberseitig eine Zuflussöffnung 31 und behälterbodenseitig eine Abflussöffnung 41. Der Abflussöffnung 41 ist ein rohrförmiger Abflussstutzen 2 angeschlossen, dem eine rohrförmige Abflussleitung 4 für die Ableitung der Flüssigkeit 5, die im Flüssigkeitsbehälter 1 aufgefangen und gespeichert wird, installiert ist. Außerdem ist dem Abflussstutzen 2 stutzenausgangsseitig ein Teilflansch 7 angesetzt, dessen Flanschrückseite dem behälterentfernten Stutzenende angeformt ist. Diesem Teilflansch 7 ist ein Blindflansch 8 komplementiert, wobei diese beiden Flansche zu einem ersten Kreisflansch 9 zusammengesetzt sind. Der zusammengesetzte erste Kreisflansch 9 liegt einem zweiten Kreisflansch 10 auf, wobei die zusammengesetzte Stirnfläche des ersten Kreisflansche 9 und die Stirnfläche des zweiten Kreisflansches 10 aufeinander liegen und zueinander (mit einem geeigneten Befestigungsmittel) befestigt sind. Dem zweiten Kreisflansch 10 ist die erwähnte Abflussleitung 4 verbunden, die an der Stirnrückseite des zweiten Kreisflansches 10 angeschlossen ist. Die Abflussleitung 4 ist als Rohrleitung ausgeführt, wobei Außendurchmesser d der Abflussleitung 4 (Rohrleitung) mit demjenigen des ersten und zweiten Kreisflansches 9, 10 übereinstimmt. Auch der Kreismittelpunkt KMP der Flanschfläche (der Stirnfläche) der beiden Kreisflansche 9, 10 ist mit demjenigen der Querschnittsfläche der Abflussleitung 4 identisch.

Sofern mehrere Flüssigkeitsbehälter 1 um eine lotrecht auf dem Kreismittelpunkt KMP stehende fiktive Hochachse 14 angeordnet sind, wird man eine Anordnung vorfinden, nach der die nebeneinander gelegenen Teilflansche 7 der Flüssigkeitsbehälter 1 mit oder ohne dem komplementierten Blindflansch 8 zu dem ersten Kreisflansch 9 zusammengesetzt sind.

Um etwaigen Missverständnissen vorzubeugen wird ergänzt, dass es sich bei dem ersten und zweiten Kreisflansch 9, 10 um einen flanschumfänglich (nicht flächenausgesparten) vollständigen 360°-kreisförmigen Kreisflansch handelt.

Die Abflussöffnung 41 ist einem Behälterboden 6 mittig versetzt angeordnet. Sie ist durch einen randseitlich gelegenen Flächenbereich des Behälterbodens 6 des Flüssigkeitsbehälters 1 geführt, wobei sich dieser Teil des Randbereiches der erwähnten Hochachse 14 zuwendet.

Es wurde bereits erwähnt, dass das äußere Aussehen des einzelnen Flüssigkeitsbehälters 1 unterschiedlicher Gestalt ist. Hierzu wurde auf genannte Halb-, Drittel- und Vierteltanks 11, 12, 13 aufmerksam gemacht, die einen kreisumfänglichen Teilabschnitt 15 aufweisen. Sofern mehrere Flüssigkeitsbehälter 1 gleichen Aussehens kreisumfänglich verteilt um die Hochachse 14 angeordnet und nebeneinander positioniert sind, entspricht dieser Teilabschnitt 15 des einzelnen Halb-, Drittel- und Vierteltanks 11, 12, 13 einem Teilbereich (des etwa 360°-kreisförmigen Gesamtumfang) der Behälteraußenwandung 16.

Der einzelne Halb-, Drittel- und Vierteltank 11, 12, 13 ist demnach etwa mit einem Viertel oder einem Drittel oder einer Hälfte des Gesamtumfanges der Behälteraußenwandung 16 (von um die Hochachse 14 kreisumfänglich verteilten Tanks gleichen Aussehens) realisiert. Dieser konkave Teilbereich der Behälteraußenwandung (16), der nach innen zur Hochachse 14 gewölbt und in deren Richtung vom Behälterboden 6 bis zur Behälterdeckfläche aufgespannt ist, ist mit der Form des Teilabschnittes 15 ausgestattet.

Zurückkommend auf die Anordnung der Flansche wird ergänzt, dass dem ersten Kreisflansch 9 wenigstens ein Teilflansch 7 und ein Blindflansch 8 komplementiert ist. Anstelle des (allgemein bezeichneten) Teilflansches 7 setzt man - entsprechend der vorgesehenen Montage von Halb- oder Viertel- oder Dritteltanks 11, 12, 13 - entweder einen Halbflansch 71 oder einen Drittelflansch 72 oder einen Viertelflansch 73 ein, dem ein Blindflansch 8 ergänzt wird. Letzterer ist mit einem Halbblindflansch 81 oder einem Drittelblindflansch 82 oder einem Zweidrittelblindflansch 83 oder einem Viertelblindflansch 84 oder einem Dreiviertelblindflansch 86 realisiert. Die aneinander stoßenden Flanschseiten der komplementierten Flansche (Teilflansch 7 und Blindflansch 8 in entsprechender Ausführung) zu dem ersten Kreisflansch 9 sind passgenau angeordnet.

Dem einzelnen Teilflansch 7 ist jeweils eine Flanschöffnung ausgenommen ist, die dem (nicht tankbefestigten Ende des Abflussstutzens 2) stutzenausgangsseitig angeschlossen ist. Außerdem ist dem zweiten Kreisflansch 10 unterhalb der ihm stirnseitig aufliegenden Teilflansche 7 (Halbflansch 71, Drittelflansch 72, Viertelflansch 73) jeweils eine weitere Flanschöffnung ausgenommen ist, wobei diese (nicht sichtbaren) Flanschöffnungen und eine Durchgangsöffnung einer Flanschdichtung, die zwischen dem ersten und zweiten Kreisflansch 9, 10 angeordnet ist, in rohrförmiger Verlängerung des betreffenden Abflussstutzens 2 positioniert sind, die konform und deckungsgleich angeordnet sind.

Erwähnt wird auch, dass die Abflussleitung 4 (Rohrleitung) unverzweigt ausgeführt ist, über welche die abgeleitete Flüssigkeit 5 direkt einem Abflussleitungssystem, das einem Drainagemast angeschlossen ist, eingespeist wird.

Weiterhin besteht die Möglichkeit, Flüssigkeitsbehälter 1 mit zylinderförmiger Gestalt für die Einrichtung zur Lagerung und Weiterleitung von Flüssigkeit, wie in den Figuren 12 bis 15 dargestellt, zu verwenden. Sofern mehrere zylinderförmige Flüssigkeitsbehälter 1 kreisumfänglich verteilt um die Hochachse 14 angeordnet sind, berührt der als Flüssigkeitsbehälter 1 ausgeführte einzelne Zylindertank 19 wenigstens einmal die Behälteraußenwandung 16 des neben ihm positionierten Zylindertanks 19, oder er steht dieser Behälteraußenwandung 16 des Zylindertanks 19 sehr nahe. Außerdem besteht (nach der Fig. 15) die Möglichkeit, dass die Abflussöffnung 41 schrägverlaufend in Richtung der Hochachse 14 durch den Behälterboden 6 geführt ist und der ihr angeschlossene Abflussstutzen 2 stutzenausgangsseitig dem einzelnen Teilflansch 7 randseitlich und nahegelegen des Kreismittelpunktes KMP angeschlossen ist.

Dadurch wird erreicht, dass der erste Teilflansch 9a (nach der Fig. 15) aus Teilflanschen 7 (aus Viertelflansch 73a) mit geringerem Radius zusammengesetzt ist.

Zurückkommend auf eine erste Ausführung nach den Figuren 2 bis 4 wird eine Einrichtung mit bis zu zwei Halbtanks 11, die als Flüssigkeitsbehälter eingesetzt sind, vorgestellt. Die Fig. 2 zeigt hierzu einen Halbtank 11 in einer Vorderansicht im fertig montierten Zustand. Der Aufstellungsort dieses Halbtanks 11 befindet sich im Unterflurbereich eines Flugzeuges, der über eine Zuflussleitung 3 (eine Abwasserleitung) gespeist wird. Letztere ist der tankoberseitigen Zuflussöffnung 31 angeschlossen, über jene die Flüssigkeit 5 (das Abwasser) in den Tank gelangt. Der Anschluss des Abflussstutzens 2 an die Abflussöffnung 41 und dessen Leitungsverbindung zum einem Halbflansch 71 erfolgt wie vorher allgemein geschildert. Interessant ist die Anordnung des Halbflansches 7 und des Halbblindflansches 81, die beide zu dem ersten Kreisflansch 9 komplementiert werden. Letzterer wird dichtungsunterlegt auf einem zweiten Kreisflansch 10 positioniert und mit diesem befestigt. Deutlich wird man der Fig. 2 entnehmen, dass der Durchmesser d hinsichtlich der beiden Kreisflansche 9, 10 und der Abflussleitung 4, die dem zweiten Kreisflansch angeschlossen ist, gleiches Abmaß besitzt. Auch wird die auf dem Kreismittelpunkt KMP lotrecht stehende Hochachse 14 deutlich hervorgehoben, an welcher der einzelne Halbtank 11 mit der nicht konkaven Behälteraußenwandung 16 positioniert ist.

Die Fig. 3 zeigt in Korrelation der Fig. 2 dem Betrachter die Draufsicht der Behältermontage eines einzelnen Halbtanks 11. Der Behälterquerschnitt des einzelnen Halbtanks 11 erinnert an die Gestalt eines fertiggebackenen längsgeschnittenen Brots, wen man die Enden des konkaven Teilabschnittes der Behälteraußenwandung 16 mit dem ebenflächigen Teilabschnitt 18 der Behälteraußenwandung 16 nahezu randflächig verbindet.

Aus der Fig. 4 entnimmt man die Draufsicht von zwei montierten Halbtanks 11. Die Montage der beiden Halbtanks 11 geschieht nach dem Vorbild des einzelnen Halbtanks 11 nach den Figuren 2 und 3. Beide Tanks werden mit dem ebenflächigen (nicht konkaven) Teilabschnitt 18 der Behälteraußenwandung 16 an der Hochachse 14 positioniert, wobei beide Halbtanks 11 sich in diesem Bereich der Behälteraußenwandung 16 berühren. Im Unterschiede der vorgeschilderten Einzelmontage wird der Halbblindflansch 81 durch einen weiteren Halbflansch 71 ersetzt.

Eine zweite Ausführung nach den Figuren 5 bis 7 zeigt eine Einrichtung mit bis zu drei Dritteltanks 12, die als Flüssigkeitsbehälter 1 verwendet werden. Der Behälterquerschnitt des einzelnen Dritteltanks 12 erinnert etwa an das Aussehen einer Dreiecksfläche von einem stumpfwinkligen Dreieck, wobei an der gradlinigen Seite dieses Dreiecks, die gegenüberliegend einem seitenbegrenzten Winkel größer als 90° eingeschlossen ist, eine Teilfläche angesetzt ist, die von einer konkaven Kurve und dieser gradlinigen Seite eingeschlossen ist.

Die Draufsicht der Fig. 5 zeigt hierzu einen Dritteltank 12 im fertig montierten Zustand. Dieser Dritteltank 12 wird über eine (nicht gezeigte) Zuflussleitung 3 (eine Abwasserleitung) mit Flüssigkeit 5 (Abwasser) gespeist. Die Zuflussleitung 31 ist der tankoberseitig befindlichen Zuflussöffnung 31 angeschlossen, über welche die Flüssigkeit 5 (das Abwasser) in den Dritteltank 12 gelangt. Der Anschluss des Abflussstutzens 2 an die tankbodenseitig befindliche Abflussöffnung 41 und die Leitungsverbindung des Abflussstutzens 2 zu einem Drittelflansch 72 erfolgt wie vorher allgemein geschildert. Am Ende des Abflussstutzens 2 befindet sich ein ihm angeschlossener Drittelflansch 72. Diesem Drittelflansch 72 wird ein Zweidrittelblindflansch 83 komplementiert, um den ersten Kreisflansch 9 zu realisieren. Letzterem und einem zweiten Kreisflansch 10 wird eine Dichtung unterlegt. Beide Kreisflansche 9, 10 werden - wie allgemein vorgetragen - aufeinander angeordnet und zueinander befestigt. Auch wird gezeigt, dass der Dritteltank 12 mit den beiden ebenflächigen (nicht konkav gewölbten) Teilabschnitten der Behälteraußenwandung 16 gegenüberliegend dem konkav gewölbten Teilabschnitt 15 der Behälteraußenwandung 16 eine vertikal verlaufende Seitenkante 17 bildet, die infolge der randabschnittlichen Verbindung dieser ebenflächigen Teilabschnitte entsteht. Die Seitenkante 17 ist an (oder nahezu an) der auf dem Kreismittelpunkt KMP lotrecht stehenden Hochachse 14 positioniert.

Nach der Fig. 6 wird dem einzelnen Dritteltank 12 ein zweiter Dritteltank 12 hinzugefügt. Seine Montage geschieht gleichermaßen, wie vorher hinsichtlich dem einzelnen Dritteltank 12 nach der Fig. 5 beschrieben. Da der zweite Dritteltank 12 ebenfalls einen Drittelflansch 72 aufweist, wird hinsichtlich der Komplementierung des ersten Kreisflansches 9 den vorhandenen.beiden Drittelflanschen 72 der Zweidrittelblindflansch 83 (nach Fig. 5) gegen einen Drittelblindfalsch 82 ausgetauscht.

Aus der Fig. 7 wird ersichtlich, dass der Einrichtung nach der Fig. 6 ein dritter Dritteltank 12 montiert wird. Dessen Montage geschieht auch nach dem Vorbild der Fig. 5, wie vorher hinsichtlich dem einzelnen Dritteltank 12 nach der Fig. 5 beschrieben. Da der dritte Dritteltank 12 ebenfalls einen Drittelflansch 72 aufweist, wird hinsichtlich der Komplementierung des ersten Kreisflansches 9 kein weiterer Drittel- oder Zweidrittelblindflansch 82, 83 benötigt. Die Komplementierung des ersten Kreisflansches 9 wird allein mit den drei Drittelflanschen 72 vorgenommen.

Eine dritte Ausführung nach den Figuren 8 bis 11 zeigt eine Einrichtung mit bis zu vier Vierteltanks 13, die als Flüssigkeitsbehälter 1 verwendet werden.

Der Behälterquerschnitt des einzelnen Vierteltanks 12 erinnert etwa an das Aussehen einer Dreiecksfläche von einem rechtwinkligen Dreieck, wobei an der Hypotenuse dieses Dreiecks, die sich gegenüberliegend dem rechten Winkel befindet, eine Teilfläche angesetzt ist, die von einer konkaven Kurve und dieser Hypotenuse eingeschlossen ist.

Die Draufsicht der Fig. 8 zeigt hierzu einen Vierteltank 13 im fertig montierten Zustand. Auch dieser Vierteltank 13 wird über eine (nicht gezeigte) Zuflussleitung 3 (eine Abwasserleitung) mit Flüssigkeit 5 (Abwasser) gespeist. Die Zuflussleitung 31 ist der tankoberseitig befindlichen Zuflussöffnung 31 angeschlossen, über welche die Flüssigkeit 5 (das Abwasser) in den Vierteltank 13 gelangt. Der Anschluss des Abflussstutzens 2 an die tankbodenseitig befindliche Abflussöffnung 41 und die Leitungsverbindung des Abflussstutzens 2 zu einem Viertelflansch 73 erfolgt wie vorher allgemein geschildert. Am Ende des Abflussstutzens 2 befindet sich ein ihm angeschlossener Viertelflansch 73. Diesem Viertelflansch 73 wird ein Dreiviertelblindflansch 85 komplementiert, um den ersten Kreisflansch 9 zu realisieren.

Letzterem und einem zweiten Kreisflansch 10 wird ebenfalls eine Dichtung unterlegt. Beide Kreisflansche 9, 10 werden -wie allgemein vorgetragen - aufeinander angeordnet und zueinander befestigt. Auch hier wird figurlich gezeigt, dass der Vierteltank 13 mit den beiden ebenflächigen (nicht konkav gewölbten) Teilabschnitten der Behälteraußenwandung 16 gegenüberliegend dem konkav gewölbten Teilabschnitt 15 der Behälteraußenwandung 16 eine vertikal verlaufende Seitenkante 17 bildet, die infolge der randabschnittlichen Verbindung dieser ebenflächigen Teilabschnitte entsteht. Die Seitenkante 17 ist an (oder nahezu an) der auf dem Kreismittelpunkt KMP lotrecht stehenden Hochachse 14 positioniert.

Nach der Fig. 9 wird dem einzelnen Vierteltank 13 ein zweiter Vierteltank 13 hinzugefügt. Seine Montage geschieht gleichermaßen, wie vorher hinsichtlich dem einzelnen Vierteltank 13 nach der Fig. 8 beschrieben. Da der zweite Vierteltank 13 ebenfalls einen Viertelflansch 73 aufweist, wird hinsichtlich der Komplementierung des ersten Kreisflansches 9 den vorhandenen beiden Viertelflanschen 73 der Dreiviertelblindflansch 85 (nach Fig. 8) gegen einen Halbblindflansch 81 ausgetauscht.

Aus der Fig. 10 wird ersichtlich, dass der Einrichtung nach der Fig. 9 ein dritter Viertelltank 13 montiert wird. Dessen Montage geschieht auch nach dem Vorbild der Fig. 8, wie vorher hinsichtlich dem einzelnen Vierteltank 13 nach der Fig. 8 beschrieben. Da der dritte Vierteltank 13 ebenfalls einen Viertelflansch 73 aufweist, wird hinsichtlich der Komplementierung des ersten Kreisflansches 9 ein weiterer Viertelblindflansch 84 ergänzt.

Die Fig. 11 vermittelt, dass der Einrichtung nach der Fig. 10 noch ein vierter Vierteltank 13 montiert wird. Auch dessen Montage geschieht auch nach dem Vorbild der Fig. 8, wie vorher hinsichtlich dem einzelnen Vierteltank 13 nach der Fig. 8 beschrieben. Da der vierte Vierteltank 13 ebenfalls einen Viertelflansch 73 aufweist, wird hinsichtlich der Komplementierung des ersten Kreisflansches 9 kein weiterer Viertelblindflansch 84 ergänzt. Die Komplementierung des ersten Kreisflansches 9 wird allein mit den vier Viertelflanschen 73 vorgenommen.

Eine vierte Ausführung nach den Figuren 12 bis 15 zeigt eine Einrichtung mit bis zu vier Zylindertanks 19, die als Flüssigkeitsbehälter 1 verwendet werden. Der Behälterquerschnitt des einzelnen Zylindertanks 19 entspricht etwa dem einer Kreisfläche.

Die Draufsicht der Fig. 12 zeigt hierzu zwei Zylindertanks 19 im fertig montierten Zustand, deren Behälteraußenwandung 16 sich im Berührungsbereich B der (nicht gezeigten) Hochachse 14 berühren. Beide Zylindertanks 19 (Hohlzylinder) sind horizontal gegenüberstehend montiert, deren fiktive Horizontalachsenverlängerung 20, die durch das Kreiszentrum der Zylindergrund- oder deckfläche führt, auch die Hochachse 14 berührt. Auch dieser Zylindertank 19 wird über eine (nicht gezeigte) Zuflussleitung 3 (eine Abwasserleitung) mit Flüssigkeit 5 (Abwasser) gespeist.

Die Zuflussleitung 31 ist der tankoberseitig befindlichen Zuflussöffnung 31 angeschlossen, über welche die Flüssigkeit 5 (das Abwasser) in den Zylindertank 19 gelangt. Der Anschluss des Abflussstutzens 2 an die tankbodenseitig befindliche Abflussöffnung 41 und die Leitungsverbindung des Abflussstutzens 2 zu einem Viertelflansch 73 erfolgt wie vorher allgemein geschildert. Am Ende des Abflussstutzens 2 der beiden Zylindertanks 19 befindet sich jeweils ein ihm angeschlossener Halbflansch 71. Diesem Halbflansch 71 wird kein Blindflansch 8 komplementiert, um den ersten Kreisflansch 9 zu realisieren. Letzterem und einem zweiten Kreisflansch 10 wird ebenfalls eine Dichtung unterlegt. Beide Kreisflansche 9, 10 werden - wie allgemein vorgetragen - aufeinander angeordnet und zueinander befestigt.

Die Draufsicht der Fig. 13 zeigt drei Zylindertanks 19 im fertig montierten Zustand, deren Behälteraußenwandung 16 sich im Berührungsbereich B der (nicht gezeigten) Hochachse 14 gegenseitig berühren. Die Zylindertanks 19 (Hohlzylinder) sind um die (nicht gezeigte) Hochachse 14 kreisförmig verteilt montiert, wobei eine fiktive Querachsenverlängerung 21 das Kreiszentrum der Zylindergrund- oder deckfläche und die Hochachse 14 berührt. Auch dieser Zylindertank 19 wird über eine (nicht gezeigte) Zuflussleitung 3 (eine Abwasserleitung) mit Flüssigkeit 5 (Abwasser) gespeist. Die Zuflussleitung 31 ist jeweils der tankoberseitig befindlichen Zuflussöffnung 31 verbunden, über welche die Flüssigkeit 5 (das Abwasser) den einzelnen (der drei montierten) Zylindertank 19 erreicht. Der Anschluss des Abflussstutzens 2 an die tankbodenseitig befindliche Abflussöffnung 41 und die Leitungsverbindung des Abflussstutzens 2 zu einem Drittelflansch 72 erfolgt wie vorher allgemein geschildert. Am Ende des Abflussstutzens 2 der beiden Zylindertanks 19 befindet sich jeweils ein ihm angeschlossener Drittelflansch 72. Diesem Drittelflansch 72 wird kein Blindflansch 8 komplementiert, um den ersten Kreisflansch 9 zu realisieren. Letzterem und einem zweiten Kreisflansch 10 wird ebenfalls eine Dichtung unterlegt. Beide Kreisflansche 9, 10 werden - wie allgemein vorgetragen - aufeinander angeordnet und zueinander befestigt.

In der Fig. 14 werden nun vier fertig montierte Zylindertanks 19 gezeigt, deren Behälteraußenwandung 16 sich ebenfalls im Berührungsbereich B der (nicht gezeigten) Hochachse 14 gegenseitig berühren.

Die Zylindertanks 19 (Hohlzylinder) sind um die (nicht gezeigte) Hochachse 14 kreisförmig verteilt montiert, wobei eine fiktive Vertikalachsenverlängerung 22 die Kreiszentren der Zylindergrund- oder deckfläche von zwei vertikal positionierten Zylindertanks 19 berührt. Auch werden diese Zylindertanks 19 über eine (nicht gezeigte) Zuflussleitung 3 (eine Abwasserleitung) mit Flüssigkeit 5 (Abwasser) versorgt. Die Zuflussleitung 31 ist jeweils der tankoberseitig befindlichen Zuflussöffnung 31 verbunden, über welche die Flüssigkeit 5 (das Abwasser) den einzelnen (der vier montierten) Zylindertank(s) 19 erreicht. Der Anschluss des Abflussstutzens 2 an die tankbodenseitig befindliche Abflussöffnung 41 und die Leitungsverbindung des Abflussstutzens 2 zu einem Viertelflansch 73 erfolgt wie vorher allgemein geschildert. Am Ende des Abflussstutzens 2 der vier Zylindertanks 19 befindet sich jeweils ein ihm angeschlossener Viertelflansch 73. Diesem Viertelflansch 73 wird kein Blindflansch 8 komplementiert, um den ersten Kreisflansch 9 zu realisieren. Letzterem und einem zweiten Kreisflansch 10 wird ebenfalls eine Dichtung unterlegt. Beide Kreisflansche 9, 10 werden - wie allgemein vorgetragen - aufeinander angeordnet und zueinander befestigt.

Die Einrichtung mit den vier montierten Zylindertanks 19 nach der Fig. 15 ist der Einrichtung nach der Fig. 14 sehr ähnlich. Sie unterscheidet sich hinsichtlich der Einrichtung nach der Fig. 14 durch einen beabsichtigten Schrägverlauf der (nicht deutlich erkennbaren) Abflussöffnung 41 durch den Behälterboden 6 des betreffenden Zylindertanks 19, die in Richtung der Hochachse 14 geführt ist. Der ihr angeschlossene Abflussstutzen 2 eines jeden Zylindertanks 19 ist stutzenausgangsseitig dem einzelnen Viertelflansch 73a randseitlich und nahegelegen des Kreismittelpunktes KMP angeschlossen. Dadurch wird erreicht, dass der Viertelflansch 73a (beispielsweise im Vergleich demjenigen Viertelflansch 73 nach der Fig. 14) mit einem geringeren Radius ausgeführt ist.

Eine fünfte Ausführung nach den Figuren 16 bis 18 zeigt eine Einrichtung mit bis zu drei Dritteltanks 12, die als Flüssigkeitsbehälter 1 verwendet werden. Diese Dritteltanks 12 sind nach dem Vorbild der Figuren 5 bis 7 um die erwähnte fiktive Hochachse 14 angeordnet. Es wird erwähnt, dass die nachfolgend geschilderte Verbindungstechnologie sich auch auf Verbindungen mit Flüssigkeitsbehältern 1 der vorgestellten Art (Halbtanks 11, Vierteltank 13 oder Volltank 19) übertragen lässt, nach der die Abflussleitung 4 über weitere Verbindungselemente mit dem betreffenden Dritteltank 12 verbunden wird. Dabei ist der einzelne Dritteltank 12 über eine Flanschverbindung von flanschverbundenen Rohrstutzen, die der Abflussöffnung 41 des betreffenden Dritteltanks 12 verbunden ist, einem (weiteren) dritten Kreisflansch 24 angeschlossen. Letzterem folgt ein flanschrandseitlich angesetzter Trichter 29, dem ausgangs der Trichteröffnung mit kleinerem Durchmesser diese Abflussleitung 4 angeschlossen ist.

Nach der Fig. 16 wird berücksichtigt, dass - entsprechend dem Vorbild der Fig. 7 - drei Dritteltanks 12 der Abflussleitung 4 angeschlossen werden. Am Beispiel von einer Dritteltank-Abflussleitung-Verbindung erläutert - wird ein erster Abflussstutzen 2a eingesetzt, welcher der Abflussöffnung 41 eines ersten (von drei installierten) Dritteltanks 12 angeschlossen ist.

Diesem Abflussstutzen 2a ist stutzenausgangsseitig (am unbefestigten freien Ende des Abflussstutzens 2a) ein kreisförmiger erster Anschlussflansch 23a angeformt. Letzterem ist (nach dem Vorbild der Fig. 16b) eine Abflussflansch-Öffnung 31 ausgenommen, die dem ersten Abflussstutzen 2a angeschlossen ist.

Diese Anschlußart an die Abflussöffnung 41 eines zweiten und dritten Dritteltanks 12 wird für die Tankverbindung eines zweiten und dritten Abflussstutzens 2b, 2c, denen ein zweiter respektive dritter kreisförmiger Abflussflansch 23 b, 23c angeformt ist, übernommen. Außerdem sind der Stirnseite des erwähnten dritten Kreisflansches 24 drei weitere Verbindungsöffnungen 25 eingelassen, denen jeweils ein rohrförmiger Verbindungsstutzen 26 angeschlossen ist. Diese Stutzen-Anordnung bezieht sich auf einen ersten, zweiten und dritten Verbindungsstutzen 26a, 26b, 26c, wobei dem ersten Verbindungsstutzen 26a ein erster Verbindungsflansch 27a und dem zweiten Verbindungsstutzen 26b ein zweiter Verbindungsflansch 27b und dem dritten Verbindungsstutzen 26c ein dritter Verbindungsflansch 27c angeformt ist. Dabei ist diesen Verbindungsflanschen 27a, 27b, 27c jeweils (nach dem Vorbild der Fig. 16c) eine Verbindungsflansch-Öffnung 32 ausgenommen, die dem betreffenden Verbindungsstutzen 26a, 26b, 26c angeschlossen ist. Da diese Verbindungsflansche 27a, 27b, 27c den Abflussflanschen 23a, 23 b, 23c (mechanisch) verbunden werden, wird die Lage der Rohrachsen der betreffenden Abfluss- und Verbindungsstutzen 2a, 2b, 2c, 26a, 26b, 26c übereinstimmen. Sofern den (mit geeigneten Verbindungselementen) zu verbindenden Abfluss- und Verbindungsflanschen 23a, 23b, 23c, 27a, 27b, 27c (nach dem Vorbild der Fig. 19) eine weitere Flanschdichtung 30 unterlegt ist, wobei die Flanschöffnungen dieser zu verbindenden Flansche und eine weitere Durchgangsöffnung dieser Flanschdichtung 30 in rohrförmiger Verlängerung des Abflussund des Verbindungsstutzens 23, 26 konform und deckungsgleich positioniert sind, kann eine mechanische Flanschverbindung geschehen. Hierzu wird (vorgreifend) auf die Fig. 19 hingewiesen, aus welcher man die allgemeine Ausführung einer fertigen Flanschverbindung von flanschangeschlossenen Rohrleitungen entnehmen wird. Diese mechanische Verbindung des beispielhaften ersten Abflussflansches 23a und des ersten Verbindungsflansches 27a wird beispielsweise mit einer sogenannten V-Schelle 28 realisiert, welche flanschumfänglich geklammert wird, wobei gleichfalls deren Schellenenden diese beiden Flansche flanschrandseitlich am Flanschumfang (mit einer entsprechenden Vorspannkraft) drücken werden. Ein entsprechender Flächendruck der Flanschflächen auf die Flanschdichtung 30 wird durch flanschrandseitlich ausgeübten Flächendruck der Schellenenden auf die Flanschdichtung 30 ausreichend übertragen, so dass die Flanschdichtung 30 die einzelne Flanschverbindung genügend abdichten wird. Es wird vorgesehen, dass der einzelne Abflussflansch 23, 23a, 23b, 23c und der einzelne Verbindungsflansch 27, 27a, 27b, 27c flanschrandseitlich kegelartig gestaltet ist, der gemeinsame Flanschumfang bei Auflage von deren Stirnflächen also eine Kegelgestalt aufweisen wird, und die einzelne V-Schelle eine Profilschelle für Kegelflansch-Verbindungen ist, deren Schellenform (umfänglicher Schellenklammerbereich) der gebildeten Kegelflanschform angepasst ist. Ein bspw. (nicht dargestellter) Schnappverschluß, der den Profilschellen umfänglich integriert ist, wird beim Spannen der Profilschelle(n) für die flanschrandseitlich notwendige Druckübertragung (Druckverteilung) auf den Rand der zu verbindenden Flansche sorgen.

Aus der Fig. 16b wird der Fachmann den (nicht deutlich erkennbaren) Anschluss des ersten, zweiten und dritten Abflussstutzens 2a, 2b, 2c an die vorgesehenen Abflussöffnungen 41 des betreffenden Dritteltanks 12 gedanklich wahrnehmen und die Lage des stutzenverbundenen ersten, zweiten und dritten Abflussflansches 23a, 23b, 23c erkennen, die mit der Ansicht A - A nach der Fig. 16 korrelliert. Ebenso wird dieser Fachmann aus der Fig. 16c den (nicht deutlich erkennbaren) Anschluss des ersten, zweiten und dritten Verbindungsstutzens 26a, 26b, 26c an den dritten Kreisflansch 4 registrieren und die Lage des ersten, zweiten und dritten Verbindungsflansches 27a, 27b, 27c erkennen, die mit der Ansicht B - B nach der Fig. 16 korreliert.

In der Fig. 17 wird nun - entsprechend dem Vorbild der Fig. 6 - die Anordnung von zwei Dritteltanks 12 berücksichtigt, die mit der Abflussleitung 4 verbunden werden. Diese Dritteltank-Abflussleitung-Verbindung unterscheidet sich hinsichtlich der vorgeschilderten Ausführung durch wenige Veränderungen, die nachfolgend angegeben werden. Danach entfällt (nach diesem Beispiel) zunächst die Verbindung des ersten Abflussstutzens 2a mit der Abflussöffnung 41 eines nicht installierten (ersten) Dritteltanks 12. Ansonsten bleibt der weitere (hinsichtlich drei installierter Dritteltanks 12 vorgesehene) Aufbau erhalten, mit dem Unterschied, dass der erste Abflussflansch 23a durch einen Blindflansch 33 ersetzt wird, mit dem eine Verbindungsflanschöffnung 32 des ersten Verbindungsflansches 27a verschlossen wird.. Dieser Blindflansch 33 besitzt eine dem (ersten, zweiten und dritten) Abflussflansch 23a, 23b, 23c gleichförmige Gestalt. Auch die mechanische V-Schellen-Verbindung des Blindflansches 33 mit dem ersten Verbindungsflansch 27a wird gleichermaßen (wie beschrieben) ausgeführt. Diese Leitungsverbindung zur Abflussleitung 4 ist damit stillgelegt.

Aus der Fig. 17b wird der Fachmann den (nicht deutlich erkennbaren) Anschluss des zweiten und dritten Abflussstutzens 2b, 2c an die vorgesehenen Abflussöffnungen 41 des betreffenden (zweiten und dritten) Dritteltanks 12 gedanklich wahrnehmen und die Lage des stutzenverbundenen zweiten . und dritten Abflussflansches 23b, 23c erkennen, die mit der Ansicht C - C nach der Fig. 17 korrelliert. Die Darstellung der Fig. 17c (Ansicht D - D) stimmt mit derjenigen nach der Fig. 16c (Ansicht B - B) überein.

Bleibt die Berücksichtigung der Anordnung nach der Fig. 18 mit der Installation von einem Dritteltank 12 - entsprechend dem Vorbild der Fig. 5 übrig, welcher mit der Abflussleitung 4 verbunden wird. Diese Dritteltank-Abflussleitung-Verbindung unterscheidet sich hinsichtlich der vorgeschilderten Ausführung (mit drei Dritteltanks 12) durch die nachfolgend angegeben Veränderungen. Danach entfällt (nach diesem Beispiel) die Verbindung des ersten und dritten Abflussstutzens 2a, 2c mit der Abflussöffnung 41 der(s) nicht installierten (ersten und dritten) Dritteltanks 12.

Ansonsten bleibt der weitere (hinsichtlich drei installierter Dritteltanks 12 vorgesehene) Aufbau erhalten, mit dem Unterschied, dass der erste und der dritte Abflussflansch 23a, 23c jeweils durch einen Blindflansch 33 ersetzt wird. Diese Blindflansche 33 besitzen eine dem (ersten, zweiten und dritten) Abflussflansch 23a, 23b, 23c gleichförmige Gestalt. Auch die mechanische V-Schellen-Verbindung des Blindflansches 33 mit dem ersten und dem dritten Verbindungsflansch 27a wird gleichermaßen (wie beschrieben) ausgeführt. Diese Leitungsverbindungen zur Abflussleitung 4 sind damit stillgelegt.

Aus der Fig. 18b wird der Fachmann den (nicht deutlich erkennbaren) Anschluss des zweiten Abflussstutzens 2b an der vorgesehenen Abflussöffnung 41 des betreffenden (zweiten) Dritteltanks 12 gedanklich wahrnehmen und die Lage des stutzenverbundenen zweiten Abflussflansches 23b erkennen, die mit der Ansicht E - E nach der Fig. 18 korrelliert. Die Darstellung der Fig. 18c (Ansicht F - F) stimmt mit denjenigen nach der Fig. 16c (Ansicht B - B) und Fig. 17c überein.

Wie angedeutet - vermittelt die Fig. 19 eine allgemeine Darstellung der mechanisch ausgeführten Flanschverbindung eines Abflussflansches 23 und eines Verbindungsflansches 27. Gemäß dieser Darstellung ist dem gewählten Abflussstutzen (2) stutzenausgangsseitig (beispielsweise anstelle eines [allg. bezeichneten] Teilflansches 7 nach der Fig. 2 oder aber eines Drittelflansches 72 nach den Figuren 5 bis 7) ein kreisförmiger Abflussflansch 23 und dem einzelnen Verbindungsstutzen 26 stutzeneingangsseitig ein kreisförmiger Verbindungsflansch 27 angesetzt. Dabei ist dem Abflussflansch 23 eine (figurlich hier nicht gezeigte) Abflussflansch-Öffnung 31 ausgenommen, die dem Abflussstutzen 2 angeschlossen ist. Ebenso ist dem Verbindungsflansch 27 eine (figurlich hier nicht gezeigte) Verbindungsflansch-Öffnung 32 ausgenommen, die dem Verbindungsstutzen 26 angeschlossen ist. Der Abflussflansch 23 und der Verbindungsflansch 27 sind kegelartig (mit flanschumfänglich kegeligem Ansatz) ausgebildet, um die Dichtheit der mit einer Flanschdichtung 30 unterlegten Flanschflächen und die flanschrandseitliche Befestigung mittels der V-Schelle 28, die als Profilschelle für Kegelflansch-Verbindung ausgebildet ist, zum Vorteil zu unterstützen. Wie vorher angedeutet - sind die Stirnflächen des Abflussflansches 23 und des Verbindungsflansches 27 aufeinander liegend positioniert, denen diese weitere Flanschdichtung 30 unterlegt ist, wobei die Flanschöffnungen und eine weitere Durchgangsöffnung dieser Flanschdichtung 30 in rohrförmiger Verlängerung des Abfluss- und des Verbindungsstutzens 23, 26 positioniert sind, die konform und deckungsgleich angeordnet sind. Die erwähnte V-Schelle 28 wird zur mechanischen Verbindung und Befestigung des Abflussflansches 23 mit dem Verbindungsflansch 27 eingesetzt, die randseitlich mit hoher Axialkraft auf die Flanschränder drückt.

Mit derartigen Einrichtungen nach den Figuren 2 bis 18 wird die Realisierung eines Baukastensystems für Tankanordnungen, die im Unterflurbereich von Passagierflugzeugen eingerüstet werden, möglich. Im Vergleich der traditionellen Bauweise nach der Fig. 1 werden mehrere Rationalisierungseffekte erreicht, die vorher angegeben werden. Eine Vereinfachung der Montage und eine Reduzierung der Vielfalt an benötigen Bauteilen zum Anschluß an das Wasser- bzw. Abwassersystem eines Flugzeuges nährt den Gedanken der Umsetzung einer leichten kompakten Bauweise, der bei einem Großraum-Passagierflugzeug greifen sollte.

### Bezugszeichen

- 1: Flüssigkeitsbehälter
- 11: Halbtank
- 12: Dritteltank
- 13: Vierteltank
- 19: Volltank, zylinderförmig
- 2: Abflussstutzen
- 2a: erster Abflussstutzen
- 2b: zweiter Abflussstutzen
- 2c: dritter Abflussstutzen
- 3: Zuflussleitung
- 31: Zuflussöffnung
- 4: Abflussleitung
- 41: Abflussöffnung
- 42: Leitungsverzweigung
- 43: Hauptabflussleitung
- 5: Flüssigkeit
- 6: Behälterboden
- 7: Teilflansch
- 71: Halbflansch
- 72: Drittelflansch
- 73: Viertelflansch
- 73a: Viertelflansch - mit geringerem Radius
- 8: Blindflansch
- 81: Halbblindflansch
- 82: Drittelblindflansch
- 83: Zweidrittelblindflansch
- 84: Viertelblindflansch
- 85: Dreiviertelblindflansch
- 9: erster Kreisflansch
- 9a: erster Kreisflansch - mit geringerem Durchmesser
- 10: zweiter Kreisflansch
- 14: fiktive Hochachse
- 15: Teilabschnitt, konkav, kreisumfänglich
- 16: Behälteraussenwandung
- 17: Seitenkante, spitz zulaufend
- 18: Teilabschnitt, ebenflächig
- 20: Horizontalachsenverlängerung, fiktiv
- 21: Querachsenverlängerung, fiktiv
- 22: Vertikalachsenverlängerung, fiktiv
- 23: Abflussflansch, kreisförmig
- 23a: erster Abflussflansch
- 23b: zweiter Abflussflansch
- 23c: dritter Abflussflansch
- 24: dritter Kreisflansch
- 25: Verbindungsöffnungen
- 26: Verbindungsstutzen, rohrförmig
- 26a: erster Verbindungsstutzen
- 26b: zweiter Verbindungsstutzen
- 26c: dritter Verbindungsstutzen
- 27: Verbindungsflansch
- 27a: erster Verbindungsflansch
- 27b: zweiter Verbindungsflansch
- 27c: dritter Verbindungsflansch
- 28: V-Schelle; Profilschelle für Kegelflansch-Verbindung
- 29: Trichter, stumpfkegelartig
- 30: weitere Flanschdichtung
- 31: Abflussflansch-Öffnung
- 32: Verbindungsflansch-Öffnung
- 33: Blindflansch

- d: Aussendurchmesser
- KMP: Kreismittelpunkt
- B: Berührungsbereich

## Patentansprüche

1. Einrichtung für die Lagerung und Weiterleitung von Flüssigkeit, bestehend aus wenigstens einem Flüssigkeitsbehälter (1) mit einer behälteroberseitig eingelassenen Zuflussöffnung (31) und einer behälterbodenseitig eingelassenen Abflussöffnung (41), wobei letzterer ein rohrförmiger Abflussstutzen (2) angeschlossen ist, an dem eine rohrförmige Abflussleitung (4) für die Ableitung einer Flüssigkeit (5), die im Flüssigkeitsbehälter (1) gespeichert wird, installiert ist, **dadurch gekennzeichnet, dass** dem Abflussstutzen (2) stutzenausgangsseitig ein Teilflansch (7) angesetzt ist, dem ein Blindflansch (8) komplementiert ist, wobei diese beiden Flansche zu einem ersten Kreisflansch (9) zusammengesetzt sind, und letzterer einem zweiten Kreisflansch (10), dem die Abflussleitung (4) angeschlossen ist, stirnflächig aufliegend befestigt ist, deren Außendurchmesser (d) und Kreismittelpunkt (KMP) identisch ist.

2. Einrichtung nach Anspruch 1, **dadurch gekennzeichnet, dass** mehrere Flüssigkeitsbehälter (1) um eine lotrecht auf dem Kreismittelpunkt (KMP) stehende fiktive Hochachse (14) angeordnet sind, wobei die nebeneinander gelegenen Teilflansche (7) der Flüssigkeitsbehälter (1) mit oder ohne dem komplementierten Blindflansch (8) zu dem ersten Kreisflansch (9) zusammengesetzt sind.

3. Einrichtung nach den Ansprüchen 1, und 2, **dadurch gekennzeichnet, dass** der erste und zweite Kreisflansch (9, 10) ein 360°-kreisförmiger Kreisflansch ist.

4. Einrichtung nach den Ansprüchen 1 und 2, **dadurch gekennzeichnet, dass** die Abflussöffnung (41) einem Behälterboden (6) mittig versetzt angeordnet ist, die durch einen randseitlichen und sich der Hochachse (14) zuwendenden Bereich des Behälterbodens (6) geführt ist.

5. Einrichtung nach den Ansprüche 1 und 2 , **dadurch gekennzeichnet, dass** das äußere Aussehen des einzelnen Flüssigkeitsbehälters (1) unterschiedlicher Gestalt ist, und letzterer, sofern mehrere nebeneinander positionierte Flüssigkeitsbehälter (1) gleichen Aussehens kreisumfänglich verteilt um die Hochachse (14) angeordnet sind, einen kreisumfänglichen Teilabschnitt (15) eines etwa 360°-kreisförmigen Gesamtumfanges der nebeneinander positionierten Flüssigkeitsbehälter (1) aufweist, der mit etwa einem Viertel oder eines Drittel oder einer Hälfte des Gesamtumfanges realisiert ist.

6. Einrichtung nach den Ansprüche 1, 2 und 5, **dadurch gekennzeichnet, dass** ein Teilbereich der Behälteraußenwandung (16), der in Richtung der Hochachse (14) aufgespannt ist, mit der Form des Teilabschnittes (15) ausgestattet ist.

7. Einrichtung nach den Ansprüchen 1, 5 und 6, **dadurch gekennzeichnet, dass** der Flüssigkeitsbehälter (1) jeweils mit einem Halbtank (11) oder einem Dritteltank (12) oder einem Vierteltank (13) oder einem Zylindertank (19) realisiert ist, wobei nur Tanks mit gleicher äußerer Gestalt kreisumfänglich verteilt um die Hochachse (14) angeordnet sind.

8. Einrichtung nach den Ansprüchen 1 und 2, **dadurch gekennzeichnet, dass** dem ersten Kreisflansch (9) wenigstens ein Teilflansch (7), der mit einem Halbflansch (71) oder einem Drittelflansch (72) oder einem Viertelflansch (73) realisiert ist, und ein ergänzender Blindflansch (8), der mit einem Halbblindflansch (81) oder einem Drittelblindflansch (82) oder einem Zweidrittelblindflansch (83) oder einem Viertelblindflansch (84) oder einem Dreiviertelblindflansch (86) realisiert ist, komplementiert ist, wobei die aneinander stoßenden Flanschseiten passgenau angeordnet sind.

9. Einrichtung nach den Ansprüchen 1, 2 und 4, **dadurch gekennzeichnet, dass** dem einzelnen Teilflansch (7) jeweils eine Flanschöffnung ausgenommen ist, die stutzenausgangsseitig angeschlossen ist, und dem zweiten Kreisflansch (10) wenigstens unterhalb der ihm stirnseitig aufliegenden Teilflansche (7, 71, 72, 73) jeweils eine weitere Flanschöffnung ausgenommen ist, wobei diese Flanschöffnungen und eine Durchgangsöffnung einer Flanschdichtung, die zwischen dem ersten und zweiten Kreisflansch (9, 10) angeordnet ist, in rohrförmiger Verlängerung des betreffenden Abflussstutzens (2) positioniert sind, die konform und deckungsgleich angeordnet sind.

10. Einrichtung nach den Ansprüchen 2 und 9, **dadurch gekennzeichnet, dass** die Anzahl der weiteren Flanschöffnungen des zweiten Kreisflansches (10) gleich der maximalen Anzahl der installierten Flüssigkeitsbehälter (1) ist.

11. Einrichtung nach den Ansprüchen 2 und 9, **dadurch gekennzeichnet, dass** unterhalb dem komplementierten Blindflansch (8) keine Durchgangsöffnung der Flanschdichtung angeordnet ist.

12. Einrichtung nach Anspruch 1, **dadurch gekennzeichnet, dass** die Abflussleitung (4) unverzweigt ausgeführt ist, über welche die abgeleitete Flüssigkeit (5) direkt einem Abflussleitungssystem eingespeist wird.

13. Einrichtung nach den Ansprüchen 1 und 2, **dadurch gekennzeichnet, dass** das äußere Aussehen des einzelnen Flüssigkeitsbehälters (1) zylinderförmiger Gestalt ist und letzterer, sofern mehrere zylinderförmige Flüssigkeitsbehälter ((1) kreisumfänglich verteilt um die Hochachse (14) angeordnet sind, wenigstens einmal die Behälteraußenwandung (16) des neben ihm positionierten Flüssigkeitsbehälters (1) berührt oder ihr nahe steht.

14. Einrichtung nach den Ansprüchen 1, 2, 4 und 13, **dadurch gekennzeichnet, dass** die Abflussöffnung (41) schrägverlaufend in Richtung der Hochachse (14) durch den Boden (6) geführt ist und der ihr angeschlossene Abflussstutzen (2) stutzenausgangsseitig dem einzelnen Teilflansch (7) randseitlich und nahegelegen des Kreismittelpunktes (KMP) angeschlossen ist, derwegen der erste Teilflansch (9a) aus Teilflanschen (7) mit variablem Durchmesser (d) zusammengesetzt ist.

15. Einrichtung nach den Ansprüchen 1 und 2, **dadurch gekennzeichnet, dass** einem dritten Kreisflansch (24) stirnseitig mehrere Verbindungsöffnungen (25) eingelassen sind, denen jeweils ein rohrförmiger Verbindungsstutzen (26) angeschlossen ist, wobei der Kreisflansch (24) mit der rohrförmigen Abflussleitung (4) verbunden ist.

16. Einrichtung nach Anspruch 15, **dadurch gekennzeichnet, dass** dem Kreisflansch (24) ein stumpfkegelartiger Trichter (29) angeschlossen ist, dessen Wandung größeren Durchmessers flanschrandseitlich der Rückseite des Kreisflansches (24) und dessen Wandung kleineren Durchmessers rohreingangsseitig der Wandung der Abflussleitung (4) verbunden ist.

17. Einrichtung nach den Ansprüchen 1, 2, 8 und 15, **dadurch gekennzeichnet, dass** dem einzelnen Abflussstutzen (2) stutzenausgangsseitig anstelle des Teilflansches (7) ein 360° kreisförmiger Abflussflansch (23) und dem einzelnen Verbindungsstutzen (26) stutzeneingangsseitig ein kreisförmiger 360°-Verbindungsflansch (27) angesetzt ist.

18. Einrichtung nach den Ansprüchen 15 und 17, **dadurch gekennzeichnet, dass** dem einzelnen Abflussflansch (23) jeweils eine Abflussflansch-Öffnung (31) ausgenommen ist, die dem Abflussstutzen (2) angeschlossen ist, und dem einzelnen Verbindungsflansch (27) jeweils eine Verbindungsflansch-Öffnung (32) ausgenommen ist, die dem Verbindungsstutzen (26) angeschlossen ist.

19. Einrichtung nach Anspruch 17, **dadurch gekennzeichnet, dass** der Abflussflansch (23) und der Verbindungsflansch (27) flanschrandseitlich kegelartig geformt ist und bei Auflage von deren Stirnflächen kreisumfänglich ein Kegelflansch gebildet ist.

20. Einrichtung nach den Ansprüchen 15, 17 bis 19, **dadurch gekennzeichnet, dass** die Stirnflächen des Abflussflansches (23) und des Verbindungsflansches (27) aufeinander liegend positioniert sind, denen eine weitere Flanschdichtung (30) unterlegt ist, wobei die Flanschöffnungen und eine weitere Durchgangsöffnung dieser Flanschdichtung (30) in rohrförmiger Verlängerung des Abfluss- und des Verbindungsstutzens (23, 26) positioniert sind, die konform und deckungsgleich angeordnet sind.

21. Einrichtung nach Anspruch 20, **dadurch gekennzeichnet, dass** die mechanische Verbindung des Abflussflansches (23) und des Verbindungsflansches (27) mit einer V-Schelle (28) realisiert ist, die auf die Flanschränder mit einem hohen axialen Anpressdruck drückt.

22. Einrichtung nach Anspruch 21, **dadurch gekennzeichnet, dass** die mechanische FlanschVerbindung mit einer Profilschelle für Kegelflansch-Verbindungen realisiert ist.

## Claims

1. Liquid storage and distribution device, comprising at least one liquid container (1) having an inflow opening (31) let into the container top and a discharge opening (41) let into the container bottom, wherein connected to the latter is a tubular discharge spout (2), on which a tubular discharge line (4) for discharging a liquid (5) stored in the liquid container (1) is fitted, **characterized in that** attached to the discharge spout (2) on the spout outlet side is a partial flange (7) that is complemented by a blind flange (8), wherein said two flanges together make up a first circular flange (9) that is fastened so as to rest with its end face on a second circular flange (10), to which the discharge line (4) is connected, the outside diameter (d) and the circle centre (KMP) of which flanges is identical.

2. Device according to claim 1, **characterized in that** a plurality of liquid containers (1) are arranged around a fictitious vertical axis (14) that lies perpendicular to the circle centre (KMP), wherein the juxtaposed partial flanges (7) of the liquid containers (1) with or without the complementary blind flange (8) together make up the first circular flange (9).

3. Device according to claims 1 and 2, **characterized in that** the first and second circular flange (9, 10) is a 360° circular flange.

4. Device according to claims 1 and 2, **characterized in that** the discharge opening (41) is disposed offset from the centre of a container base (6) and extends through an edge-side region of the container base (6) facing the vertical axis (14).

5. Device according to claims 1 and 2, **characterized in that** the outer appearance of the individual liquid container (1) is of differing configuration, and the individual liquid container (1), if a plurality of juxtaposed liquid containers (1) of identical appearance are arranged distributed circumferentially around the vertical axis (14), comprises a circumferential sub-portion (15) of a substantially 360° circular total circumference of the juxtaposed liquid containers (1) that is realized by substantially a quarter or a third or a half of the total circumference.

6. Device according to claims 1, 2 and 5, **characterized in that** a sub-region of the container outer wall (16) that is mounted in the direction of the vertical axis (14) is equipped with the shape of the sub-portion (15).

7. Device according to claims 1, 5 and 6, **characterized in that** the liquid container (1) is realized in each case by a half-tank (11) or a third-tank (12) or a quarter-tank (13) or a cylinder tank (19), wherein only tanks of an identical external configuration are arranged distributed circumferentially around the vertical axis (14).

8. Device according to claims 1 and 2, **characterized in that** the first circular flange (9) is complemented by at least one partial flange (7), which is realized by a half-flange (71) or a third-flange (72) or a quarter-flange (73), and one supplementary blind flange (8), which is realized by a blind half-flange (81) or a blind third-flange (82) or a blind two-thirds-flange (83) or a blind quarter-flange (84) or a blind three-quarter-flange (86), wherein the mutually abutting flange sides are arranged with an accurate fit.

9. Device according to claims 1, 2 and 4, **characterized in that** in the individual partial flange (7) in each case a flange opening is cut, which is connected at the spout outlet side, and in the second circular flange (10) at least underneath the partial flanges (7, 71, 72, 73) resting against its end face in each case a further flange opening is cut, wherein said flange openings and a through-opening of a flange gasket, which is disposed between the first and second circular flange (9, 10), are positioned in tubular extension of the relevant discharge spout (2), which are disposed conformally and congruently.

10. Device according to claims 2 and 9, **characterized in that** the number of further flange openings of the second circular flange (10) is equal to the maximum number of installed liquid containers (1).

11. Device according to claims 2 and 9, **characterized in that** no through-opening of the flange gasket is disposed underneath the complementary blind flange (8).

12. Device according to claim 1, **characterized in that** the discharge line (4) is of an non-branched design, through which the diverted liquid (5) is fed directly to a discharge line system.

13. Device according to claims 1 and 2, **characterized in that** the outer appearance of the individual liquid container (1) is of a cylindrical configuration and the individual liquid container (1), if a plurality of cylindrical liquid containers (1) are arranged distributed circumferentially around the vertical axis (14), is in contact at least once with, or lies close to, the container outer wall (16) of the liquid container positioned alongside it.

14. Device according to claims 1, 2, 4 and 13, **characterized in that** the discharge opening (41) extends through the base (6) obliquely in the direction of the vertical axis (14), and the discharge spout (2) connected to the discharge opening (41) is connected at the spout outlet side to the individual partial flange (7) at the edge and close to the circle centre (KMP), such that the first partial flange (9a) is composed of partial flanges (7) of variable diameter (d).

15. Device according to claims 1 and 2, **characterized in that** let into the end face of a third circular flange (24) is a plurality of connection openings (25), to each of which a tubular connection spout (26) is connected, wherein the circular flange (24) is connected to the tubular discharge line (4).

16. Device according to claim 15, **characterized in that** connected to the circular flange (24) is a truncated-cone-like funnel (29), the larger-diameter wall of which is connected to the flange edge side of the rear of the circular flange (24) and the smaller-diameter wall of which is connected to the tube inlet side of the wall of the discharge line (4).

17. Device according to claims 1, 2, 8 and 15, **characterized in that** instead of the partial flange (7) a 360° circular discharge flange (23) is attached to the individual discharge spout (2) at the spout outlet side and a 360° circular connection flange (27) is attached to the individual connection spout (26) at the spout inlet side.

18. Device according to claims 15 and 17, **characterized in that** in the individual discharge flange (23) in each case a discharge flange opening (31) is cut, which is connected to the discharge spout (2), and in the individual connection flange (27) in each case a connection flange opening (32) is cut, which is connected to the connection spout (26).

19. Device according to claim 17, **characterized in that** the discharge flange (23) and the connection flange (27) have a flange edge shaped like a cone and, when their end faces abut, a cone flange is formed at the circumference.

20. Device according to claims 15, 17 to 19, **characterized in that** the end faces of the discharge flange (23) and the connection flange (27) are positioned resting on one another and are lined with a further flange gasket (30), wherein the flange openings and a further through-opening of said flange gasket (30) are positioned in tubular extension of the discharge- and the connection spouts (23, 26), which are arranged conformally and congruently.

21. Device according to claim 20, **characterized in that** the mechanical connection of the discharge flange (23) and the connection flange (27) is realized by a V-clamp (28) that presses with a high axial pressure upon the flange edges.

22. Device according to claim 21, **characterized in that** the mechanical flange connection is realized by a profiled clamp for cone flange connections.

## Revendications

1. Dispositif de stockage et de distribution de fluide, constitué d'au moins un réservoir de fluide (1) avec une ouverture d'arrivée (31), réalisée sur le dessus du réservoir, et une ouverture d'écoulement (41) réalisée dans le fond du réservoir, cette dernière étant connectée à un raccord d'écoulement (2) tubulaire sur lequel est installée une conduite d'écoulement (4) tubulaire pour évacuer un fluide (5) stocké dans le réservoir de fluide (1), **caractérisé par le fait qu'**il est rapporté sur le raccord d'écoulement (2), côté sortie, une bride partielle (7) complétée d'une bride aveugle (8), ces deux brides étant assemblées pour former une première bride circulaire (9) qui est fixée, en étant appliquée avec sa face frontale, à une deuxième bride circulaire (10) à laquelle est reliée la conduite d'écoulement (4) dont le diamètre extérieur (d) et le centre de cercle (KMP) sont identiques.

2. Dispositif selon la revendication 1, **caractérisé par le fait que** plusieurs réservoirs de fluide (1) sont disposés autour d'un axe vertical (14) fictif, perpendiculaire au centre de cercle (KMP), les brides partielles (7) adjacentes des réservoirs de fluide (1) étant assemblées, avec ou sans la bride aveugle (8) complémentaire, pour former la première bride circulaire (9).

3. Dispositif selon les revendications 1 et 2, **caractérisé par le fait que** les première et deuxième brides circulaires (9, 10) forment une bride circulaire de 360°.

4. Dispositif selon les revendications 1 et 2, **caractérisé par le fait que** l'ouverture d'écoulement (41) est aménagée dans un fond de réservoir (6), en étant décalée par rapport au milieu, et s'étend dans une région de bord du fond de réservoir (6), tournée vers l'axe vertical (14).

5. Dispositif selon les revendications 1 et2, **caractérisé par le fait que** l'aspect extérieur d'un réservoir de fluide (1) individuel prend des formes différentes et le réservoir, dans la mesure où plusieurs réservoirs (1) de même forme, disposés les uns à côté des autres, sont répartis autour de l'axe vertical (14), sur le pourtour d'un cercle, constitue un segment (15) de pourtour de cercle d'une périphérie totale circulaire d'à peu près 360° des réservoirs (1) placés les uns à côté des autres, réalisé avec environ un quart ou un tiers ou une moitié de la périphérie totale.

6. Dispositif selon les revendications 1, 2 et 5, **caractérisé par le fait qu'**une portion de la paroi extérieure de réservoir (16), qui s'étend dans le sens de l'axe vertical (14), est dotée de la forme du segment (15).

7. Dispositif selon les revendications 1, 5 et 6, **caractérisé par le fait que** le réservoir de fluide (1) est réalisé respectivement avec un demi-réservoir (11) ou un tiers de réservoir (12) ou un quart de réservoir (13) ou un réservoir cylindrique (19), seuls des réservoirs de même forme extérieure étant disposés autour de l'axe vertical (14), en étant répartis sur le pourtour d'un cercle.

8. Dispositif selon les revendications 1 et 2, **caractérisé par le fait que** la première bride circulaire (9) est complétée d'au moins une bride partielle (7), réalisée avec une demi-bride (71) ou un tiers de bride (72) ou un quart de bride (73), et d'une bride aveugle (8) complémentaire, réalisée avec une demi-bride aveugle (81) ou un tiers de bride aveugle (82) ou deux tiers de bride aveugle (83) ou un quart de bride aveugle (84) ou trois quarts de bride aveugle (86), les côtés de bride mises bout à bout étant disposées avec ajustement serré.

9. Dispositif selon les revendications 1, 2 et 4, **caractérisé par le fait qu'**il est réalisé dans la bride partielle (7) individuelle, respectivement une ouverture de bride qui est reliée côté sortie du raccord, et qu'il est réalisé dans la deuxième bride circulaire (10), au moins sous les brides partielles (7, 71, 72, 73) qui lui sont appliquées avec leur face frontale, respectivement une ouverture de bride supplémentaire, lesdites ouvertures de brides et une ouverture de passage d'une garniture d'étanchéité de bride, disposée entre la première et la deuxième bride circulaire (9, 10), étant placées dans le prolongement tubulaire du raccord d'écoulement (2) concerné, de manière conforme et concordante.

10. Dispositif selon les revendications 2 et 9, **caractérisé par le fait que** le nombre d'ouvertures de bride supplémentaires de la deuxième bride circulaire (10) est égal au nombre maximal des réservoirs de fluide (1) installés.

11. Dispositif selon les revendications 2 et 9, **caractérisé par le fait qu'**en dessous de la bride aveugle (8) complémentaire, il n'y a pas d'ouverture de passage de la garniture d'étanchéité de bride.

12. Dispositif selon la revendication 1, **caractérisé par le fait que** la conduite d'écoulement (4), par laquelle le fluide (5) évacué est introduit directement dans une tuyauterie d'évacuation, est réalisée sous une forme non ramifiée.

13. Dispositif selon les revendications 1 et 2, **caractérisé par le fait que** l'aspect extérieur du réservoir de fluide (1) individuel prend une forme cylindrique et le réservoir, dans la mesure où plusieurs réservoirs de fluide (1) cylindriques sont disposés autour de l'axe vertical (14), en étant répartis sur un pourtour de cercle, est en contact au moins une fois avec la paroi extérieure de réservoir (16) du réservoir de fluide (1) adjacent ou se situe à proximité de cette paroi.

14. Dispositif selon les revendications 1, 2, 4 et 13, **caractérisé par le fait que** l'ouverture d'écoulement (41) traverse le fond (6), en étant disposée en biais dans le sens de l'axe vertical (14), et le raccord d'écoulement (2) qui lui est relié est connecté côté sortie à la bride partielle (7) individuelle, côté bord et à proximité du centre de cercle (KMP), tandis que la première bride partielle (9a) est assemblée à partir de brides partielles (7) de diamètre (d) variable.

15. Dispositif selon les revendications 1 et 2, **caractérisé par le fait que** plusieurs ouvertures de liaison (25) sont ménagées dans la face frontale d'une troisième bride circulaire (24), ouvertures auxquelles est relié respectivement un raccord de liaison (26) tubulaire, la bride circulaire (24) étant reliée à la conduite d'écoulement (4) tubulaire.

16. Dispositif selon la revendication 15, **caractérisé par le fait que** la bride circulaire (24) est raccordée à un entonnoir (29) tronconique, dont la paroi de plus grand diamètre est reliée, côté bord de la bride, à la face arrière de la bride circulaire (24), et dont la paroi de plus petit diamètre est reliée, côté entrée de tuyau, à la paroi de la conduite d'écoulement (4).

17. Dispositif selon les revendications 1, 2, 8 et 15, **caractérisé par le fait que**, à la place de la bride partielle (7), une bride d'écoulement (23) circulaire de 360° est reliée au raccord d'écoulement (2) individuel, et une bride de liaison (27) circulaire de 360° est reliée au raccord de liaison (26) individuel, côté entrée de raccord.

18. Dispositif selon les revendications 15 et 17, **caractérisé par le fait qu'**il est prévu dans la bride d'écoulement (23) individuelle, respectivement une ouverture de bride d'écoulement (31) qui est connectée au raccord d'écoulement (2), et qu'il est prévu dans la bride de liaison (27) individuelle, respectivement une ouverture de bride de liaison (32) qui est connectée au raccord de liaison (26).

19. Dispositif selon la revendication 17, **caractérisé par le fait que** la bride d'écoulement (23) et la bride de liaison (27) sont conformées en cônes sur les bords de bride, et une bride conique est formée lorsque leurs faces frontales sont appliquées l'une contre l'autre sur un pourtour de cercle.

20. Dispositif selon les revendications 15, 17 à 19, **caractérisé par le fait que** les faces frontales de la bride d'écoulement (23) et de la bride de liaison (27) sont disposées de manière à être appliquées l'une contre l'autre, avec interposition d'une garniture d'étanchéité de bride (30) supplémentaire, les ouvertures de bride et une ouverture de passage supplémentaire de cette garniture d'étanchéité de bride (30) étant placées dans le prolongement tubulaire des raccords d'écoulement et de liaison (23, 26), de manière conforme et concordante..

21. Dispositif selon la revendication 20, **caractérisé par le fait que** l'assemblage mécanique de la bride d'écoulement (23) et de la bride de liaison (27) est réalisé avec un collier en V (28) qui comprime les bords de bride avec une pression d'appui axiale élevée.

22. Dispositif selon la revendication 21, **caractérisé par le fait que** l'assemblage mécanique des brides est réalisé à l'aide d'un collier profilé destiné à des assemblages de brides coniques.
